# EUROPEAN PATENT APPLICATION

(11) **EP 2 270 737 A1**
(43) Date of publication of application: **05.01.2011**
(21) Application number: 10166786.3
(22) Date of filing: 22.06.2010
(51) Int. Cl.: G06Q 30/00

(54) **Methods and systems for dynamic servicing of advertisements in a game or virtual reality environment**

(30) Priority: 24.06.2009 US 220036 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system or method for dynamically serving ads to one or more client devices in connection with the operation of an executable program. The system comprises a network interface disposed to receive an ad request associated with a device fingerprint that uniquely identifies a client device. The ad request comprises information relating to any one or more of the client device, a user operating the client device and an executable program operating on the client device. The system further comprises a memory and a processor, in communication with the network interface and the memory, the processor configured for operating the program instructions to carry out the method. The program instructions stored in the memory are operable for parsing the information in the ad request, selecting one or more ads based at least in part on the parsed information, and transmitting ad rendering data to cause the one or more ads to be displayed at the client device.

## Description

This application claims priority to U.S. Provisional Application 61/220,036, which was filed June 24, 2009, and which is fully incorporated herein by reference.

### Field of the Invention

The present disclosure relates to methods and systems for dynamically serving advertising in connection with a program, such as a game or virtual reality environment, executing at a client device.

### Description of the Related Art

A growing number of people, across all demographic categories, are shifting their attention from conventional media, such as television, radio and print, to the Internet. It is thus no surprise that advertising efforts have also followed this shift into the Internet.

One of the many advantages that the Internet offers over the conventional media is the ability to launch advertising campaigns in real-time and to more specifically reach a target audience at lower costs. In further contrast to the conventional media, a user's response to ads delivered over the Internet may be tracked in real-time and used to formulate future ad campaigns which may be relevant to the user's interests.

Recent attention has been turned to providing advertising in games and multi-player virtual reality environments. Early approaches required a coordinated effort between advertisers and game developers because the advertisements were hard-coded into the games themselves. This required advertisers to formulate ad campaigns far in advance of a game launch. One obvious disadvantage of this approach is the inability to deliver time-sensitive ad campaigns, such as movie releases or to change the ads appearing in the game after it is launched.

Recent efforts have focused on providing dynamic in-game advertising, which do not require the ads to be hard-coded into the game. Instead, an advertising application is integrated into the game platform and the advertising application enables advertisements to be delivered remotely from the game platform. The advertising application permits a two-way interaction between the game platform and the advertising agency, in which information obtained from the player or the game may be transmitted to the advertising agency and used to formulate relevant ads to be delivered into the game. This interaction usually occurs without the player's awareness or knowledge.

To the extent that such in-game advertising may result in sensitive information about a user being collected and stored, there is the ever present threat of hackers who seek to steal and misuse this data. For example, in one of the largest breaches of consumer information, hackers accessed and stole data from systems used by retail department stores to process and store consumer transaction data. While it may not be possible to protect sensitive information and data from all possible attacks, it would be desirable to increase the levels of security in applications that gather and transmit so as to make such attacks less likely to succeed.

What is therefore needed is an improved and more secure method of providing dynamic advertising in games and other multi-player virtual reality environments.

### SUMMARY

The methods and systems disclosed herein provide an improved and more secure method of providing dynamic advertising in games and other multi-player virtual reality environment by utilizing a device fingerprint to identify the target client device to which tailored advertisements may be delivered. One advantage of utilizing a device fingerprint is that sensitive information about a user cannot be ascertained from the device fingerprint and thus may be protected from unauthorized disclosure or hacking.

In one embodiment, a method is provided for dynamically serving ads to a client device in connection with the operation of an executable program. The executable program may be an interactive game or a multi-player virtual reality environment. The ads may be any one or a combination of text, audio, video and at least one programming routine that modifies the executable program running on the client device. For example, the ad may be a programming routine which interacts with the player or changes game plays, options or levels for the player.

In accordance with this embodiment, the method comprises receiving, at a server, an ad request associated with a device fingerprint that uniquely identifies the client device. The ad request comprises information relating to any one or more of the client device, a user operating the client device and an executable program running on the client device. The method further comprises selecting one or more ads based at least in part on the device fingerprint and the ad request and transmitting ad rendering data to cause the one or more ads to be displayed at the client device.

In another embodiment, a method is provided for displaying advertisements at a client device in connection with the operation of an executable program. The method comprises generating, at the client device, an ad request associated with a device fingerprint that uniquely identifies the client device. The ad request comprises information relating to any one or more of the client device, a user operating the client device, and an executable program running on the client device. The method further comprises transmitting the device fingerprint and the ad request to an ad server and displaying one or more ads at the client device. The one or more ads are selected by the ad server based at least in part on the device fingerprint and the ad request.

In a further embodiment, a system is provided for dynamically serving ads to one or more client devices in connection with the operation of an executable program operating at the one or more client devices. The system comprises a network interface disposed to receive an ad request associated with a device fingerprint that uniquely identifies a client device. The ad request comprising information relating to any one or more of the client device, a user operating the client device and an executable program operating on the client device. A memory holds program instructions operable for parsing the information in the ad request, selecting one or more ads based at least in part on the parsed information, and transmitting ad rendering data to cause the one or more ads to be displayed at the client device. A processor, in communication with the network interface and the memory, is configured for operating the program instructions stored on the memory.

In yet a further embodiment, tangible computer-readable media are provided having stored thereon, computer-executable instructions that, if executed by a computing device, cause the computing device to perform the methods disclosed herein. Server-side and client-side applications are separately provided.

A more complete understanding of methods and systems disclosed herein will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing one embodiment of a system for dynamically serving advertising to a plurality of client devices.

FIG. 2 is a schematic diagram showing another embodiment of a system for dynamically serving advertising to a plurality of client devices.

FIG. 3 is a schematic diagram showing the various modules of an embodiment of the executable program.

FIG. 4 is a flow chart showing a process of dynamically serving ads to a client device in connection with the operation of an executable program.

FIG. 5 is a flow chart showing a process of displaying advertisements at a client device in connection with the operation of an executable program.

Throughout the several figures and in the specification that follows, like element numerals are used to indicate like elements appearing in one or more of the figures.

### DETAILED DESCRIPTION

The methods and systems disclosed herein provide an improved and more secure method of providing dynamic advertising in games and other multi-player virtual reality environment by linking information pertinent to targeted marketing to a device fingerprint which uniquely identifies a client device. The methods and systems comprise both server-side and client-side components, and one of ordinary skill in the art will find that there are a variety of ways to design a client or server architecture. Therefore, the methods and systems disclosed herein are not limited to a specific client or server architecture, and encompass variations and modifications embodying he inventive systems and methods disclosed herein. An appreciation of the disclosure and many of the attendant advantages may be better understood by reference to the following detailed description of the preferred embodiments.

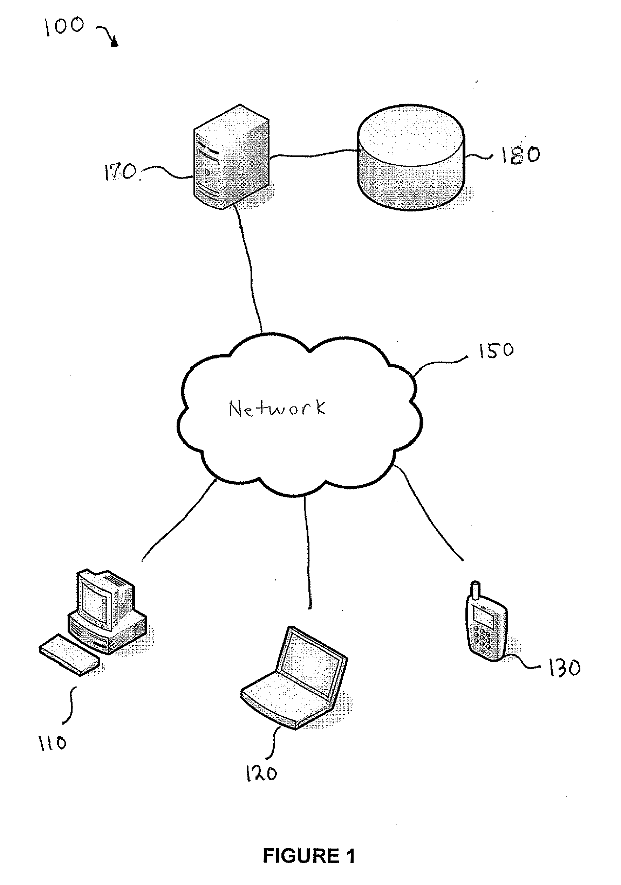

FIG. 1 illustrates one embodiment of a system 100 for dynamically serving ads to a plurality of client devices 110, 120, 130. The client devices 110, 120, 130 operate an executable program, such as a game or other interactive program, that may reside at the each of the respective client devices 110, 120, 130, a game server, or both. The client devices 110, 120, 130 each generate and transmit to the ad server 170 an ad request and an associated device fingerprint uniquely identifying the respective client device. The ad server 170, in communication with a database 180, selects one or more ads responsive to the ad request and transmits ad rendering data so as to enable the ads to be displayed at the respective client devices 110, 120, 130. The ad rendering may be performed by the client or a remotely located server (i.e., game server). Because the ad request is client device-specific, the ads displayed at each of the client devices 110, 120, 130 may be different.

The client devices 110, 120, 130 may be any device or machine capable of communicating with a computer network 150. Preferably, the client device has a processor that is operatively connected to a memory and a display to operate the executable program. Thus, suitable client devices include game consoles, personal desktop computers, portable laptop computers, server computers, tablet computers, personal digital assistants, mobile phones, wireless communication devices, and onboard vehicle computers.

The executable program operated by the client devices 110, 120, 130 may be downloaded from a remotely-located server or encoded in a computer-readable media of a data storage device which, when loaded onto the client device, causes the client device to perform the client-side processes and outputs.

The network 150 may comprise a communications network, such as the Internet, a cellular communications network, a satellite communications network, a local area network, or some combination of these or other suitable networks. The network 150 enables client devices to communicate with a remotely-located ad server and allow for the exchange of data between the client devices and the ad server.

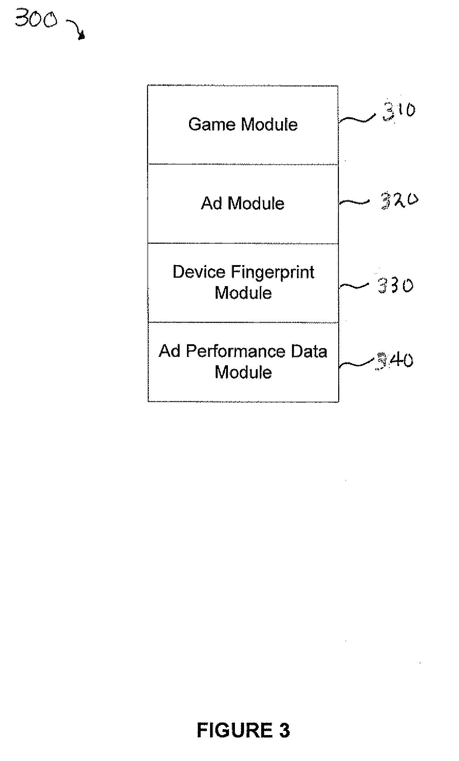

The client devices 110, 120, 130 are configured to communicate with an ad server 170 through the network 150. The ad server 170 is further configured to access a database 180 which stores associations between device fingerprints and information relating to ad requests and ad performance data. The communications between the client device 110, 120, 130 and the ad server 170 are initiated by an ad module contained in the executable program, as more fully described in reference to FIG. 3.

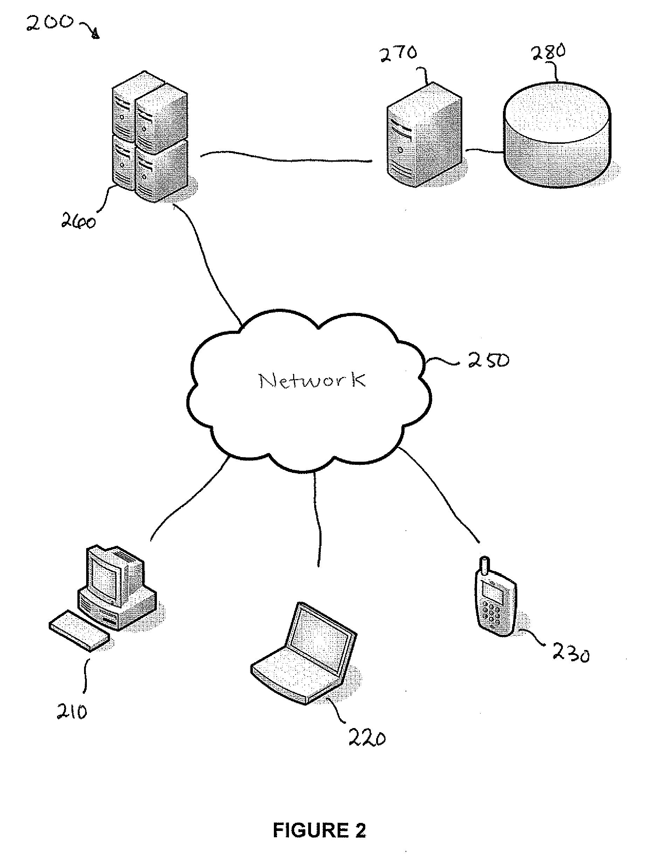

Although FIG. 1 depicts a system in which the executable program is downloaded onto the individual client devices, it is understood that the executable program may reside entirely in a game server or that components of the executable program may be shared between the individual clients and game server. For example, as further described in reference to FIG. 2, the game server and clients may share the game module to provide a coordinated multi-player virtual reality environment and the remaining ad module, device fingerprint module and ad performance data module may reside partly or entirely in the individual client devices.

FIG. 2 illustrates another embodiment of a system 200 for dynamically serving ads to a plurality of client devices 210, 220, 230. Client devices 210, 220, 230 operate an executable program that resides either entirely or party in a remotely-located game server 260, as is typically the case for multi-player virtual reality environments. Client devices 210, 220, 230 communicate with a game server 260 to generate the game or virtual reality environment on the associated displays.

The game server 260 may include any one or more of the modules (i.e., game module, ad module, device fingerprint module, ad performance data module) of the executable program. Preferably, the game server 260 and the client devices 210, 220, 230 each have components of the game module installed on the respective devices and the client devices 210, 220, 230 comprises the ad module, the device fingerprint module, and the ad data performance module. In embodiments where the game server 260 includes the ad module, fingerprint module and ad data performance module, both the game server 260 and client devices 210, 220, 230 cooperate in communicating with the ad server 270 to transmit the device fingerprint and associated ad request and ad performance data to the ad server 270. The game server 270 may further comprise a license authority which verifies and confirms that the client devices 210, 220, 230 are each operating the executable program in accordance with a corresponding license or usage policy.

As further shown in FIG. 3, an embodiment of the executable program 300 includes a program or game module 310 for providing the game environment, or aspects thereof, and an ad module 320 for generating and transmitting an ad request to a remotely-located ad server 170 through a communication network 150 and fetch one or more ads to be incorporated into the game environment for display at the client device. The executable program further includes a device fingerprint module 330, which collects one or more parameters relating to the client device and generates a device fingerprint that uniquely identifies the client device.

The game module 310 provides the game or virtual reality environment, which may be a single or multiple player game. The game module 310 may reside at the client device or may reside both at the client device and a remotely-located game server. The latter embodiment is appropriate for multi-player virtual reality games in which the game environment is rendered based on the collective input of other remotely-located players and therefore requires coordination between client-side and game server-side applications.

The ad module 320 is configured to generate and transmit an ad request to the ad server 170 via the communication network 150. The ad server 170 selects one or more ads responsive to the ad request to be incorporated into the game environment for display at the client device. The ad server 170 may further be associated with a database 180 which stores the information contained in the ad request and ad performance data in association with the device fingerprint.

The ad request may comprise information relating to any one or more of the client device, the user operating the client device and the executable program running on the client device. The purpose of the ad request is to provide sufficient information to enable an ad server to select appropriate ads that are appropriately matched with a user's demographic, preferences or interests. For example, while an ad for an upcoming release of an R-rated action movie may appropriate for a target audience comprising males, ages 18-36, it would not be appropriate for a target audience of young children, ages 12 and under.

Information relating to the client device may include information relating to the hardware or software components of the client device, any peripheral devices attached to the client device, and/or performance characteristics relating thereto. Such information may include, for example, type of device (i.e., personal computers, game consoles, handheld mobile devices), processor speed, available memory, resident software, and any other information characterizing the client device of components of the client device as would be relevant in the selection of an appropriate ad. For example, an ad that requires high bandwidth and processing capacity may not be suitable for client devices that have more limited bandwidth and processing capacity.

Information relating to the user operating the client device may include, for example, sex, age, income, education level, geographic location, and any other information which an advertiser would consider relevant to determining its target audience. Highly sensitive information regarding the user is not required since the device fingerprint accomplishes the function of uniquely identifying the client device that is to receive the ads and also associating the particular characteristics and preferences of a user operating the client device with the client device itself. Thus, the user need not input sensitive information such as social security number, credit card information, address, and so forth. The device fingerprint takes the place of such uniquely identifying information.

Information relating to the executable program may include features of the program itself, such as title, revision date, creation date, publisher game rating, etc. Information relating to the user's interactions or plays on the program, such as game state, game plays or levels completed, game scores, characteristics of avatars in the game, total playing time, average playing time, and other relevant information as it relates to the game or avatar in the game.

The device fingerprint module 330, which collects one or more parameters relating to the client device and generates a device fingerprint that uniquely identifies the client device. In a preferred embodiment, the device fingerprint module 330 collects identifying information regarding the client device and/or any software on the client device.

The device fingerprint module 330 may include a registration routine that collects information regarding the client device by checking a number of parameters which are expected to be unique to the client device environment. The parameters checked may include, for example, hard disk volume name, user name, device name, user password, hard disc initialization date, etc. The collected information may include information that identifies the hardware comprising the platform on which the web browser runs, such as, for example, CPU number, or unique parameters associated with the firmware in use. The collected information may further include system configuration information, such as amount of memory, type of processor, software or operating system serial number, etc. in the alternative, or in addition, the parameters may checked may include virtual machine specifications. Examples of virtual machine specifications may include, but are not limited to, information relating to virtual processors, virtual BIOS, virtual memory, virtual graphics, virtual IDE drives, virtual SCSI drives, virtual PCI slots, virtual floppy drives, virtual serial (COM) ports, virtual parallel (LPT) ports, virtual key board, virtual mouse and drawing tablets, virtual Ethernet card, virtual networking, virtual sound adapter, etc.

Based on the collected information, the device fingerprint module 330 may generate a device fingerprint that is unique for the client device. The device fingerprint may be generated using a combination of user-configurable and non-user-configurable machine parameters as input to a process that results in the device fingerprint, which may be expressed in digital data as a binary number. Each machine parameter is data determined by a hardware component, software component, or data component specific to the device that the unique identifier pertains to. Machine parameters may be selected based on the target device system configuration such that the resulting device fingerprint has a very high probability (e.g., greater than 99.999%) of being unique to the target device. In addition, the machine parameters may be selected such that the device fingerprint includes at least a stable unique portion up to and including the entire identifier, that has a very high probability of remaining unchanged during normal operation of the target device. Thus, the resulting device fingerprint should be highly specific, unique, reproducible and stable as a result of properly selecting the machine parameters.

The device fingerprint module 330 may also operate on the collected parameters with one or more algorithms to generate the device fingerprint. This process may include at least one irreversible transformation, such as, for example, a cryptographic hash function, such that the input machine parameters cannot be derived from the resulting device fingerprint. Each device fingerprint, to a very high degree of certainty, cannot be generated except by the suitably configured application operating or otherwise having had access to the same field security device for which the device fingerprint was first generated. Conversely, each identifier, again to a very high degree of certainty, can be successfully reproduced by the suitably configured application operating or otherwise having access to the same field security device on which the identifier was first generated.

The device fingerprint module 330 may operate by performing a system scan to determine a present configuration of the field security device. The application may then select the machine parameters to be used as input for generating the unique device fingerprint. Selection of parameters may vary depending on the system configuration. Once the parameters are selected, the application may generate the identifier.

Further, generating the device fingerprint may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

In addition to the chip benchmarking and degradation measurements, the process for generating a device fingerprint may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device fingerprint values during transmission and comparisons. Such encryption processes may be used in conjunction with random sampling and key generations.

An ad performance module 340 may optionally be further included in the executable program. The ad performance module 340 tracks and collects ad performance data relating to a user's response to the ad. Advertisers may evaluate ad performance data to determine the success of its advertisements and to further refine the advertisements or redefine the target audience receiving the ads.

Thus, ad performance data may include an identification of the ad displayed at the client device and any data indicative of a user's response, or lack thereof, to an advertisement, such as the angle or amount of time the ads are displayed at the client device, whether the user visited a website and/or purchased goods and services advertised in the ad, and any other input by the user to the ads displayed at the client device, both during and subsequent to the display of the ad.

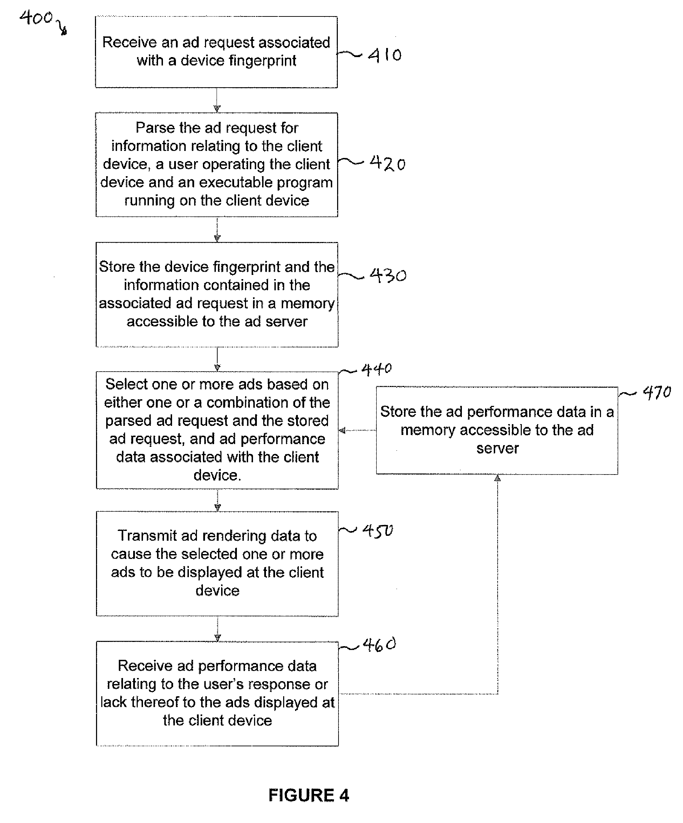

FIG. 4 is a flow chart showing a process 400 for dynamically serving ads to a client device in connection with the operation of an executable program. While the steps of FIG. 4 may be performed entirely by an ad server, it is understood that the some of the steps may be performed preferably performed by an ad server which is in communication with a plurality of client devices via a network.

At 410, the ad server receives an ad request associated with a device fingerprint 410. By associating the ad request with a device fingerprint, there is no need to collect sensitive information about a user. Moreover, as the device fingerprint and information contained in an ad request may be stored in a database, there is a reduced danger of having sensitive user information comprised, particularly since the device fingerprint is generated in a manner such that information about the user cannot readily be derived.

At 420, the ad server parses the ad request for information relating to the client device, a user operating the client device and an executable program running on the client device. The information contained in the ad request may include the types of information as described in relation to FIG. 1. In addition, the ad request may further include information relating to the ad request itself, such as the date and time the ad request was generated. This enables the delivery of time sensitive information. For example, an ad request that is received by the ad server around meal time may be relevant to ads for food or pizza delivery.

At 430, the ad server causes the device fingerprint and the information contained in the associated ad request to be stored in a memory that is accessible to the ad server. This will provide historical data and patterns regarding the client device, as uniquely identified by the device fingerprint, and may also provide further means to infer additional data regarding the client device.

At 440, one or more ads are selected based on either one or a combination of the parsed ad request and ad performance data associated with the device fingerprint. The ad server may further access an ad database which comprises a plurality of ads and serving parameters associated with the ads. For example, an ad for beer may be indicated to a user of at least 21 years of age, operating a violent game rated for mature users, and playing during certain specified times (i.e,. after 6:00 p.m.). At the same time, such an ad would be contraindicated to users under 21 years of age.

The ad server, by reference to the information contained in the ad request or stored in a memory accessible to the ad server, may match the ad to the client device based on the ad request having some or all of the serving parameters for the ad. This may be done by comparing the information contained in the ad request with the serving parameters associated with the ads. The appropriate ads may be selected based on desired match criteria. Certain ads may require a match with information associated with a client fingerprint of 25%, 50%, 75% or more, depending on an advertiser's preferences. Moreover, certain ad serving parameters may be designated as required parameters which must be met (i.e., age of user), whereas certain others designated as desired parameters (i.e., type of game being played).

In addition, the ad serving parameters may furthermore relate to the environment in which the ad is to be displayed in the game environment, such as, for example, a billboard, a commercial, product placement in a game scene.

At 450, the ad rendering data is transmitted to cause the selected one or more ads to be displayed at the client device. The ad rendering data may be transmitted to a game server or engine which renders the ad in the game environment. Alternatively, the ad rendering data may be transmitted directly to the client to be rendered by the client device.

At 460, the ad performance data may be received. Ad performance data generally relates to the user's response or lack thereof to the ads displayed at the client device. Ad performance data may be generated by, for example, tracking the user's input during or after the display of an ad. Ad performance data may indicate when a particular ad or a class of ads have previously been displayed at a particular client device and whether or not such ads were successful in evoking a response from the user. Ad performance data may additionally include, for example, the total amount of time the ad is displayed at the client device, an average angle at which it is displayed, and any other response input by the user, such as clicking or selecting on the ad or otherwise manipulating the ad. The ad performance data is associated with the device fingerprint.

At 470, the ad performance data is stored in association with the device fingerprint in a memory accessible to the ad server.

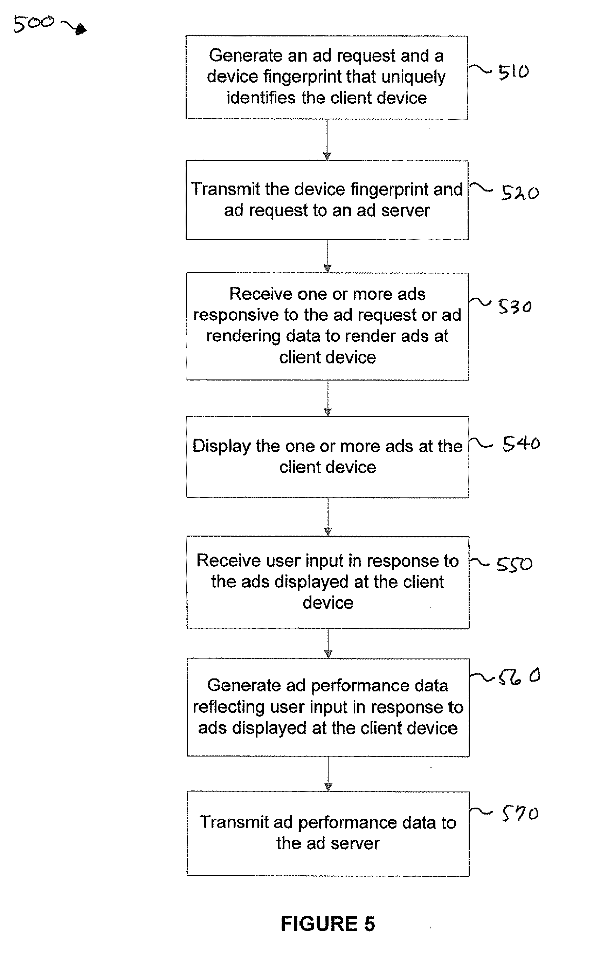

FIG. 5 is a flow chart showing a process of displaying advertisements at a client device in connection with the operation of an executable program. While the client device may perform all of the steps in FIG. 5, it is understood that any one or all of the steps may also be performed by a remotely-located game server, as depicted in FIG. 2.

At 510, an ad request and a device fingerprint that uniquely identifies the client device are generated. The timing of the ad request is coordinated well in advance of the game scene or environment in which the ad is to be displayed so as to avoid any lag time. For example, the ad request may be generated several scenes in advance of a scene containing a blank billboard or vending machine so as to enable the ad server to generate a match and populate the billboard or vending machine with a relevant ad. Alternatively, the ad request may be generated at the beginning of the game and the ad server may operate to populate all of the ad spaces existing in the game prior to the start of the game. The device fingerprint is generated by the client device as described above in relation to FIG. 3.

At 520, the device fingerprint and the ad request are transmitted to an ad server over a network. As described in relation to 510, the device fingerprint and ad request may be transmitted at the beginning or during the game.

At 530, one or more ads or ad rendering data at the client device may be received by the client device. In accordance with one aspect, the ads may be rendered by the ad or other server and delivered to the client device. In accordance with an alternative aspect, the ad may be rendered at the client device by receiving ad rendering data that contain ad rendering instructions. Regardless, at 540, the one or more ads are displayed at the client device

At 550, user input is received in response to the ads displayed at the client device and, at 560, ad performance data is generated reflecting user input in response to the ads displayed at the client device. The user input may be, for example, to zoom in on the ad, to click on the ad, or to visit a website that is hosted by or features the products or services of the advertiser. Other types of user input may involve manipulating the ad. For example, user input that approaches a product in a game scene, such as a can of soda, may act upon that product in any number of ways, such as drinking it, throwing it away, or completely ignoring it. Such input may be indicative of the user's opinion regarding the product and may be compiled and used to generate ad performance data. Advertisers may evaluate whether their ads are effective in getting the desired attention based on the ad performance data generated by a game..

At 570, ad performance data is transmitted to the ad server. The ad performance data may include an identification of the ad displayed at the client device and any data indicative of a user's response, or lack thereof, to an advertisement, such as the angle or amount of time the ads are displayed at the client device, whether the user visited a website and/or purchased goods and services advertised in the ad, and any other input by the user to the ads displayed at the client device, both during and subsequent to the display of the ad.

Having thus described preferred embodiments for the methods and systems for serving dynamic advertisements in a game or virtual reality environment, it should be apparent to those skilled in the art that certain advantages of the within methods and systems have been achieved. It should also be appreciated that various modifications, adaptations, and alternative embodiments thereof may be made without departing from the scope and spirit of the present technology. The following claims define the scope of what is claimed.

## Claims

1. A method for dynamically serving ads to a client device in connection with the operation of an executable program, the method comprising:
receiving, at a server, an ad request associated with a device fingerprint that uniquely identifies the client device, the ad request comprising information relating to any one or more of the client device, a user operating the client device and an executable program running on the client device;
selecting one or more ads based at least in part on the device fingerprint and the ad request; and
transmitting ad rendering data to cause the one or more ads to be displayed at the client device.

2. The method of claim 1, further comprising causing the device fingerprint and the information contained in the associated ad request to be stored in a memory accessible to the server.

3. The method of claim 2, wherein the selecting step is further based on the information stored in the memory and associated with the device fingerprint.

4. The method of claim 1, where the selecting step is further based on any one or both of the date and time the ad request is received at the server.

5. The method of claim 1, wherein the selecting step further comprises accessing an ad database comprising a plurality of ads and serving parameters associated with the ads.

6. The method of claim 5, wherein the selecting step one or more ads is based on a comparing the information contained in the ad request with the serving parameters associated with the ads and selecting the one or more ads based on a match.

7. The method of claim 1, further comprising receiving ad performance data indicative of a user's response to the one or more ads displayed at the client device.

8. The method of claim 1, wherein the one or more ads is any one or a combination of text, audio, video, and at least one programming routine that modifies the executable program running on the client device.

9. A method for displaying advertisements at a client device in connection with the operation of an executable program, the method comprising:
generating, at the client device, an ad request associated with a device fingerprint that uniquely identifies the client device, the ad request comprising information relating to any one or more of the client device, a user operating the client device, and an executable program running on the client device;
transmitting the device fingerprint and the ad request to an ad server; and
displaying one or more ads at the client device, the one or more ads selected by the ad server based at least in part on the device fingerprint and the ad request.

10. The method of claim 9, wherein the generating step further comprises generating the device fingerprint at the client device.

11. The method of claim 9, further comprising generating ad performance data indicative of a user's response to the one or more ads displayed at the client device.

12. The method of claim 11, wherein the generating ad performance data includes tracking any one or more of an angle or an amount of time the ads are displayed at the client device and a response input by the user to the ads displayed at the client device.

13. The method of claim 11, further comprising transmitting the ad performance data to the ad server.

14. The method of claim 9, wherein the displaying step comprises receiving ad rendering data to render the one or more ads for display at the client device.

15. The method of claim 9, wherein the generating step comprises generating the device fingerprint based on one or more parameters which are expected to be unique to the client device.
